# EUROPEAN PATENT SPECIFICATION

(11) **EP 2 006 179 B1**
(45) Date of publication and mention of the grant of the patent: **31.08.2011**
(21) Application number: 08158317.1
(22) Date of filing: 16.06.2008
(51) Int. Cl.: B60W 20/00, B60K 6/442, F01N 3/20, F02D 41/02, F01N 3/28

(54) **A hybrid vehicle, a hybrid vehicle propulsion system and a method for an exhaust gas treatment device in such a system**
Hybridfahrzeug, Antriebssystem für ein Hybridfahrzeug und Verfahren für eine Abgasverarbeitungsvorrichtung in einem solchen System
Véhicule hybride, système de propulsion de véhicule hybride et procédé de dispositif de traitement de gaz d'échappement dans un tel système

(30) Priority: 19.06.2007 EP 07110523
(43) Date of publication of application: 24.12.2008
(73) Proprietor: Ford Global Technologies, LLC, Dearborn, MI 48126 (US)
(72) Inventor: Hermansson, Jonas, SE-437 32, LINDOME (SE); Johnsson, Anders, SE-416 55, GÖTEBORG (SE); Vollmer, Niklas, SE-430 31, ÅSA (SE)
(74) Representative: Holmberg, Magnus

(56) References cited:
- EP-A1- 1 174 612
- EP-A2- 0 935 056
- DE-A1- 10 111 787
- US-A1- 2003 224 907
- US-A1- 2004 194 452

## Description

### TECHNICAL FIELD

The present invention relates to a hybrid vehicle, a hybrid vehicle propulsion system, and a method for an exhaust gas treatment device for an internal combustion engine in a hybrid vehicle further comprising an additional power source, the internal combustion engine comprising a crankshaft and at least one cylinder, the hybrid vehicle further comprising fuel storage means and fuel provision means, the exhaust gas treatment device being located downstream of the cylinder.

### BACKGROUND

The drivetrain of a hybrid vehicle includes two combined power sources for the propulsion of the vehicle. Usually an internal combustion engine is combined with an additional power source connected to or including an energy storage unit which can be charged by the internal combustion engine, and, in many solutions, also by recovery the braking energy of the vehicle.

In so called hybrid electric vehicles the additional power source is an electric motor connected to an energy storage unit including rechargeable electric accumulators for energy storage. In alternative hybrids the additional power source could include, instead of electric components, a variable displacement pump communicating with a hydraulic accumulator for energy storage, essentially in the form of a pressure tank. There are also hybrid concepts in which the additional power source includes a flywheel which stored energy and is connected to a hydrostatic transmission. In further hybrid ideas the additional power source includes an air engine connected to an air tank for energy storage. The additional power source can also be a human, such as in the case with a moped.

The drivetrain of a hybrid vehicle can be provided as a parallel hybrid arrangement, in which the engine and the additional power source (e.g. electric motor) are both connected to a mechanical transmission for delivering torque to the wheels. Where the additional power source is an electric motor, this is often provided as a combined generator and motor. Differing from parallel hybrid arrangements, in a series hybrid arrangement there is no power path from the engine to the wheels. The main task of the engine is to provide power to the additional power source and/or the energy storage unit connected thereto. Combined hybrids have features from both parallel and series hybrid arrangements, in that they have power split devices allowing the power path from the engine to be mechanically directed to the wheels, or to be directed to the additional power source or the energy storage unit connected thereto.

The operation of most hybrid vehicles with internal combustion engines usually includes a number of different modes for the power distribution in the drivetrain. For example, the vehicle can be run in a cruise mode, in which the power from the engine is split into a path to the wheels and a path to the energy storage unit, e.g. to batteries via a generator. As another example, the vehicle can be run in an energy storage unit charge mode, (for a hybrid electric vehicle usually referred to as a battery charge mode), during engine idling, in which the energy storage unit is charged by the engine, e.g. via a generator. In parallel or combined hybrid arrangements, there could also be a power boost mode in which power is provided to the wheels from both the engine and the power source, e.g. an electric motor, of the additional power source.

In addition, the operation of most hybrid vehicles with internal combustion engines usually includes engine off modes, in which the internal combustion is shut down. Such modes can include a mode in which propulsion is provided only by the additional power source. An example of such a mode is a so called electric vehicle mode in a combined or parallel hybrid electric vehicle. In order for the vehicle to be able to run in an engine off mode, necessary accessories have to be powered by the additional power source.

Usually, one or more exhaust gas treatment devices, known as catalytic converters, are provided in the exhaust system of the engine. Catalytic converters convert toxic gases such as hydrocarbons (HC), carbon monoxide (CO) and nitrogen oxides (NOx) into substances such as carbon dioxide (CO2), nitrogen (N2) and water (H2O). A catalytic converter can not fully exhibit its converting effects when the temperature thereof is lower than its activation temperature. A problem with hybrid vehicles is that during engine off modes, the catalyst converter temperature can fall below the activation temperature, in which case emissions of HC and NOx are likely to be released in large quantities when the internal combustion engine is started again.

For vehicles in general, many catalyst heating strategies has been suggested. US6161377 and US6901749 are concerned with rapidly heating the catalytic converter during cold starts. EP0935056A2 describes shutting off ignition in one or more cylinders when cranking during engine start, in order to heat the cold catalyst. EP1174612A1 describes, in a diesel engine application for regeneration of a particulate filter or a NOx-trap, injecting fuel into the cylinders during an engine brake situation. However, none of these documents are concerned with hybrid vehicles.

Generic documentUS2004/0194452A1 discloses a hybrid vehicle where fuel supply is carried out during an initial period of cranking for resuming the operation of the internal combustion engine. DE10111787A1 describes a special heater for a catalyst for rapid heating of the catalyst at a cold start. However, none of these documents are concerned with the catalyst temperature during an engine off mode.

### SUMMARY OF THE INVENTION

It is an object of the present invention to decrease emissions from a vehicle with a hybrid propulsion system including an internal combustion engine.

It is also an object of the present invention to provide optimum efficiency of an exhaust gas treatment device in a vehicle with a hybrid propulsion system including an internal combustion engine.

These objects are reached with a method of the kind mentioned initially, comprising, in an engine off mode, pumping air to the exhaust gas treatment device, controlling the fuel provision means so that fuel is allowed to the exhaust gas treatment device, and controlling air flow control means and/or the fuel provision means so as to control the combustion in the exhaust gas treatment device.

Thus, the method provides for simultaneously, in the engine off mode, pumping air to the exhaust gas treatment device, e.g. in the form of a catalytic converter, allowing fuel to the exhaust gas treatment device, and controlling air flow control means so as to control the combustion in the exhaust gas treatment device.

The invention allows for the air and fuel provided to the exhaust gas treatment device to be combusted therein, in order to prevent the temperature of the exhaust gas treatment device from falling below its activation temperature during the engine off mode. Thus, when the engine is started again, the exhaust gas treatment device is immediately fully capable of exhibiting all its converting effects, and therefore cold start emissions are avoided. Thus, an optimum efficiency of the exhaust gas treatment device is maintained at the engine off mode, and emissions from the hybrid vehicle propulsion system are decreased.

Preventing the exhaust gas treatment device from failing below its activation temperature will be secured by controlling the air flow control means and/or the fuel provision means so as to control the combustion in the exhaust gas treatment device. For example, by adjusting the air flow, for example based on the flow of fuel provided, or vice versa, it can be secured that a combustible air/fuel mixture is provided to the catalytic converter.

Preferably, controlling the combustion in the exhaust gas treatment device comprises controlling a location or a region of a maximum temperature in the exhaust gas treatment device. Thereby, as explained closer below, the air flow control means and/or the fuel provision means, can be used to control the temperature distribution in a longitudinal direction of the catalytic converter. This allows for moving the maximum temperature which reduces the risk of damaging the catalytic converter by high temperature exposure. As an example, moving the temperature further downstream in the catalytic converter can be accomplished by increasing the air flow, and vide versa.

Preferably, the exhaust gas treatment device comprises at least one catalyst monolith, of which an upstream monolith is located furthest upstream in the exhaust system, and wherein controlling a location or a region of a maximum temperature in the exhaust gas treatment device comprises controlling the air flow control means and/or the fuel provision means so that the location in the exhaust gas treatment device of the maximum temperature is downstream of an upstream end of the upstream monolith. This will reduce risks of excessive temperatures and damage at the upstream end of the exhaust gas treatment device, and also provide for effectively maintaining the temperature of downstream regions of the device during the engine off mode.

Preferably, the air flow control means and/or the fuel provision means are controlled so that the location in the exhaust gas treatment device of the maximum temperature is not upstream of a threshold location, the distance between the threshold location and an upstream end of the upstream monolith being at least twenty percent of the extension of the upstream monolith in an exhaust flow direction. This will secure heating of downstream regions of the catalytic converter. Preferably, said distance between the threshold location and an upstream end of the upstream monolith is at least fifty percent of the extension of the upstream monolith in the exhaust flow direction. Advantageously, where there is more than one monolith, the fuel control means can be controlled, during at least a portion of the exhaust gas treatment device regeneration, so that the location in the exhaust gas treatment device of the maximum temperature is in a downstream monolith.

Preferably, the step of pumping air to the exhaust gas treatment device comprises rotating the crankshaft of the engine by means of the additional power source. This means that the engine, in the engine off mode, with the crankshaft rotated by means of the additional power source and its piston(s) therefore moving in the cylinder(s), will work as an air pump, pumping air to the exhaust gas treatment device. Rotating the crankshaft of the engine by means of the additional power source can for example be done by one or more transmissions, at least one of which provides a power split function. Thereby, the air control means can be adapted to control the air flow into the at least one cylinder whereby the air flow control may or may not be individually controlled for each cylinder. It should be noted that the air flow control means can comprise any suitable means for controlling the air flow, such as a throttle valve, and/or control means for the inlet valves and/or the exhaust valves at the cylinders, e.g. in the form of a variable valve timing (VVT) system and/or a cam profile shifting (CPS) system.

Where the crankshaft of the engine is rotated by means of the additional power source, the fuel provision means can be adapted to allow fuel into at least one of the cylinders so as to allow fuel to the exhaust gas treatment device. Thereby the fuel provision may or may not be individually controlled for each cylinder. In the engine off mode, the engine is not providing any mechanical power in the hybrid propulsion system, for example for vehicle propulsion or battery charging, and combustion in the at least one cylinder is inhibited. It should be noted that where ignition means are provided at each cylinder, the engine off mode will involve controlling the ignition means so as to inhibit combustion in the at least one cylinder. (In a spark ignition engine this involves inhibiting sparks.) The combustion inhibition will allow air flowing into the cylinders to continue through them, and simultaneous control of the fuel provision means so that fuel is allowed into at least one of the cylinders with the result of the fuel being mixed and transported with the air.

More specifically, by allowing fuel injection while combustion is inhibited, the fuel can be thoroughly mixed with air in the cylinder(s). The long transportation after the cylinder(s) allows additional mixture of the air and fuel before reaching the catalytic converter. This provides a homogeneous distribution of fuel and air across the lateral extensions of the catalytic converter, in which the mixture is combusted so as to effectively heat the catalytic converter with minimal risks of damage to the converter. This is provided simply by use of fuel injectors included in the fuel provision means, without the need for additional equipment in the engine system. Also, since the energy for heating the catalytic converter is transported chemically, i.e. in the air/fuel mixture, and converted to thermal energy in the catalytic converter, there are essentially no energy losses between the engine and the catalytic converter.

Preferably, the method comprises determining the temperature of the exhaust gas treatment device, the amount of fuel allowed into the at least one of the cylinders, in the step of controlling the fuel provision means, being controlled in dependence on the temperature of the exhaust gas treatment device. For example, if it is desired to decrease the exhaust gas treatment device temperature, the amount of fuel provided can be decreased, and vice versa. Where the internal combustion engine comprises at least two cylinders, and the fuel provision means comprises fuel injection means by means of which fuel injection can be controlled individually of each cylinder, or group of cylinders, the method can further comprise determining the temperature of the exhaust, gas treatment device, the number of cylinders into which fuel is allowed, in the step of controlling the fuel provision means, being dependent on me temperature of the exhaust gas treatment device. For example, if it is desired to decrease the exhaust gas treatment device temperature, the number of cylinders in which fuel is injected while ignition is inhibited can be decreased, and vice versa.

In a further embodiment, where the step of pumping air to the exhaust gas treatment device comprises rotating the crankshaft of the engine by means of the additional power source, and the fuel provision means comprises purge gas control means for controlling a supply of purge gas from a fuel vapor retainer to the engine, the step of controlling the fuel provision means comprises controlling the purge gas control means so that purge gas is allowed into at least one of the cylinders.

As a further alternative, the step of pumping air to the exhaust gas treatment device can comprise supplying air downstream of the at least one cylinder. Thereby, the air flow control means can comprise an air pump adapted to supply air downstream of the at least one cylinder. As an additional or separate alternative, the step of controlling the fuel provision means can comprise supplying fuel downstream of the at least one cylinder. Thereby, the fuel provision means can comprise a fuel pump adapted to supply fuel downstream of the at least one cylinder.

In some embodiments the method comprises controlling the air flow control means and the fuel provision means so as to provide a mixture to the exhaust gas treatment device with a lambda value of at least 1.0.

As is known in the art, the lambda value is defined as the actual air/fuel ratio divided by the stoichiometric air/fuel ratio, and a mixture with a lambda value of at least 1.0 is a lean mixture. The inventors have discovered during tests that reducing the fuel content in the mixture provided to the exhaust system will reduce the temperature at the upstream end of the exhaust gas treatment device. An explanation to this could be that a reduced fuel content will reduce the rate of combustion of the mixture. Assuming that the gas flow is essentially constant, a reduced combustion rate will result in a larger portion of the combustion taking place further downstream in the exhaust gas treatment device.

In other words, such embodiments of the invention provides for controlling the temperature distribution in the exhaust gas treatment device. More specifically, the air control means and the fuel provision means can be controlled by the control unit (ECU) to obtain an air/fuel ratio being based at least partly on a desired temperature distribution in the exhaust gas treatment device. The result is a very effective maintenance of the temperature in the entire catalytic converter during the engine off mode, minimizing risks of the damage to the catalytic converter caused by excessive temperatures. This is provided simply by use of the fuel provision means, without the need for additional equipment in the system.

Preferably, the lambda value of the mixture provided to the exhaust gas treatment device is not lower than 1.25 and not higher than 2.0. The tests performed by the inventors have shown that within this lambda interval, very favorable results regarding the exhaust gas treatment device temperature distribution can be accomplished.

Preferably, the control of the air flow control means and the fuel provision means, so as to provide a mixture to the exhaust gas treatment device with a lambda value of at least 1.0, can comprise controlling the air flow into any of the cylinders into which fuel is allowed, so that it is reduced, or so that it is below a threshold air flow. The threshold air flow could be such that the difference between the threshold air flow and a minimum air flow is not larger than twenty percent of the difference between a maximum air flow and the minimum air flow. For example, the minimum air flow could be 0.3 grams per engine revolution, and the maximum air flow could be 1.5 grams per engine revolution, which means that the threshold air flow would be (0.3+0.2 *(1.5-0.3)=) 0.54 grams per engine revolution. Thus, the threshold, minimum and maximum air flows could refer to the air flow of the entire engine. However, in cases where the air flow can be controlled individually for cylinders or groups of cylinders, it would be more accurate that the threshold, minimum and maximum air flows refer to the air flow into individual cylinders in which combustion is inhibited and into which fuel is allowed. The limitation of the air flow can be accomplished in a number of ways, for example where the air flow control means comprises a throttle valve, the throttle valve can be kept closed.

The objects are also reached with a method according to any of the claims 12 or 13.

The objects are also reached with a hybrid vehicle propulsion system comprising an internal combustion engine and an additional power source, the internal combustion engine comprising a crankshaft and at least one cylinder, the hybrid vehicle propulsion system further comprising fuel storage means, fuel provision means, an exhaust gas treatment device being located downstream of the cylinder, and a control unit, the system being adapted to, in an engine off mode, pump air to the exhaust gas treatment device, and wherein the control unit is adapted to control, in the engine off mode and while air is pumped to the exhaust gas treatment device, the fuel provision means so that fuel is allowed to the exhaust gas treatment device, and to simultaneously control air flow control means so as to control the combustion in the exhaust gas treatment device.

Preferably, the control unit is adapted to control the combustion in the exhaust gas treatment device by controlling a location or a region of a maximum temperature in the exhaust gas treatment device. Preferably, where the exhaust gas treatment device comprises at least one catalyst monolith, of which an upstream monolith is located furthest upstream in the exhaust system, the control unit is adapted to control the location or the region of the maximum temperature in the exhaust gas treatment device by controlling the air flow control means and/or the fuel provision means so that the location in the exhaust gas treatment device of the maximum temperature is downstream of an upstream end of the upstream monolith. Preferably, the control unit is adapted to control the air flow control means and/or the fuel provision means so that the location in the exhaust gas treatment device of the maximum temperature is not upstream of a threshold location, the distance between the threshold location and an upstream end of the upstream monolith being at least twenty percent of the extension of the upstream monolith in an exhaust flow direction. Preferably, the distance between the threshold location and the upstream end of the upstream monolith is at least fifty percent of the extension of the upstream monolith in an exhaust flow direction.

In some embodiments, the system is adapted to pump air to the exhaust gas treatment device by rotating the crankshaft of the engine by means of the additional power source. Thereby, where the fuel provision means comprises purge gas control means for controlling a supply of purge gas from a fuel vapor retainer to the engine, the control unit being adapted to control the fuel provision means can comprise the control unit being adapted to control the purge gas control means so that purge gas is allowed into at least one of the cylinders.

In some embodiments the system is adapted to pump air to the exhaust gas treatment device by supplying air downstream of the at least one cylinder. Alternatively or in addition, the control unit being adapted to control the fuel provision means can comprise the control unit being adapted to control a supply of fuel downstream of the at least one cylinder.

In some embodiments of the system, the control unit is adapted to control the air flow control means and the fuel provision means so as to provide a mixture to the exhaust gas treatment device with a lambda value of at least 1.0. Preferably, the control unit is adapted to control the air flow control means and the fuel provision means so as to provide a mixture to the exhaust gas treatment device with a lambda value not lower than 1.25 and not higher than 2.0.

The objects are also reached with a system according to any of the claims 15 or 16,

Further, the objects are reached with a hybrid vehicle according to claim 17.

### DESCRIPTION OF THE FIGURES

Below, the invention will be described in detail with reference to the drawings, in which
- fig. 1 shows a schematic view of a hybrid vehicle propulsion system with a combined hybrid structure,
- fig. 2 shows schematically certain of the hybrid vehicle propulsion system parts in fig. 1 in some detail,
- fig. 3 shows a block diagram depicting a method according to a preferred embodiment of the invention,
- fig. 4 is a schematic side view of a detail in fig. 2 with temperature distribution curves,
- fig. 5 is a schematic side view of the detail in fig. 4 with a diagram depicting temperature distributions,
- fig. 6 is a schematic side view of an alternative to the detail shown in fig. 5,
- fig. 7 shows a schematic view of a hybrid vehicle propulsion system with a parallel hybrid structure,
- fig. 8 shows schematically certain of the hybrid vehicle propulsion system parts in fig. 7 in some detail,
- fig. 9 shows a block diagram depicting a method according to an alternative embodiment of the invention,
- fig. 10 shows a schematic view of a hybrid vehicle propulsion system with a series hybrid structure, and
- fig. 11 shows a block diagram depicting a method according to a further alternative embodiment of the invention,

### DETAILED DESCRIPTION

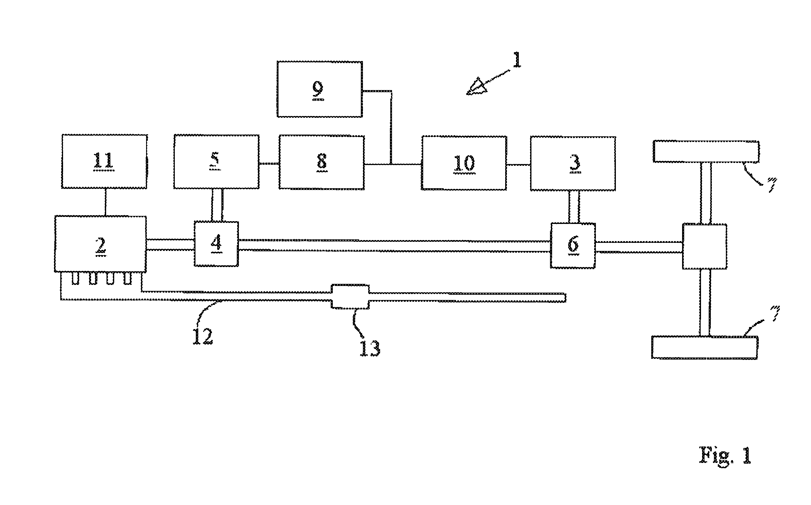

Fig. 1 shows parts of a hybrid vehicle propulsion system 1 with a combined hybrid structure, the propulsion system 1 comprising an internal combustion engine 2 and an additional power source 3 in the form of an electric motor 3. A first transmission 4 provides in a manner known in the art a mechanical connection between the engine 2, a generator 5 and a second transmission 6, which in turn provides a mechanical connection between the engine 2 via the first transmission 4, the motor 3 and two wheels 7 of the vehicle. The generator 5 is electrically connected to a charger 8, which in turn is connected to an energy storage unit 9 comprising a plurality of batteries, and to a converter 10, the latter being connected to the motor 3. Fuel storage means 11 comprising a fuel tank 11, and an exhaust system 12 with an exhaust treatment device 13 in the form of a catalytic converter 13 are provided for the engine 2.

The transmissions 4, 6 are controllable as described below and work as power split devices to allow the power path from the engine 2 to be mechanically directed to the wheels 7, or to be directed via the generator 5 and the charger 8 to the motor 3 or to the batteries 9. The transmissions 4, 6 also allow mechanical power from the motor 3 to be directed to the engine 2, as discussed closer below.

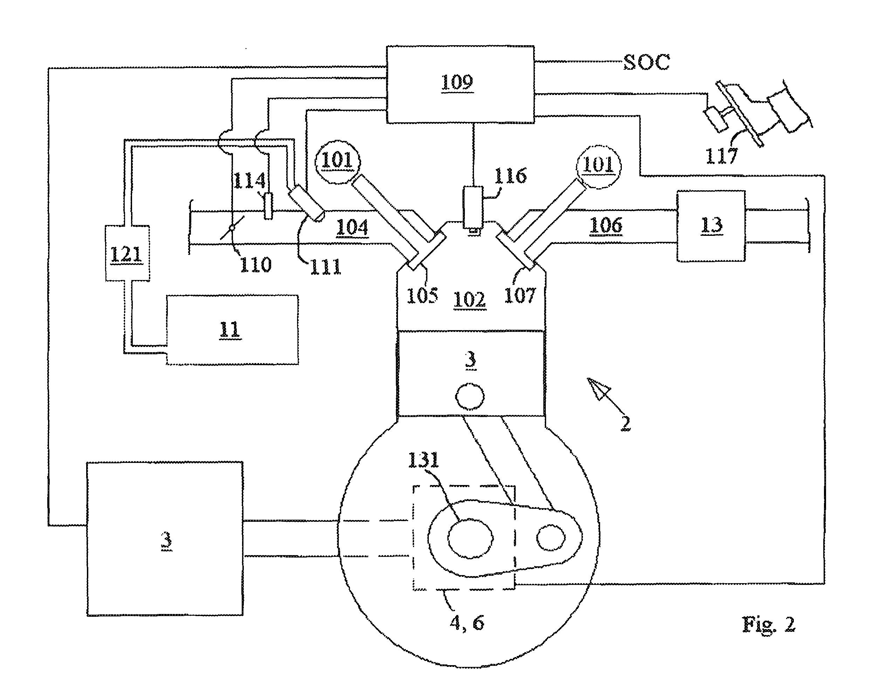

Fig. 2 shows schematically certain of the hybrid vehicle propulsion system parts in fig. 2 in some detail. The internal combustion engine 2 comprises at least one cylinder 102 with a reciprocating piston 103 connected to a crankshaft 131. The crankshaft 131 is mechanically connected to the motor 3 via the transmissions 4, 6 as also depicted in fig. 1, (the transmissions 4, 6 being depicted in fig. 2 with broken lines).

Communication between the cylinder 102 and an inlet duct 104 is controlled by at least one inlet valve 105, and communication between the cylinder 102 and an exhaust duct 106 is controlled by at least one exhaust valve 107. Downstream of the cylinder(s) 102, the catalytic converter 13 is provided.

The propulsion system 1 also comprises a control unit 109, which has computational and data memory capacities, and which can be provided as one unit, or as more than one logically interconnected physical units. The control unit 109 is adapted to control air flow control means comprising a throttle valve 110, and fuel provision means 111 comprising at least one fuel injector 111 in the inlet duct 104. In this embodiment, where the engine presents more than one cylinder, the fuel injection can be controlled individually for each cylinder, by a fuel injector being provided at a separate portion of the inlet duct 104 communicating with the respective cylinder, (so called port fuel injection). Alternatively, as is known in the art, a fuel injector can be provided in each cylinder 102, (so called direct fuel injection). As a further alternative, one single fuel injector can be provided for more than one cylinder, or all cylinders, for example at an upstream portion of the inlet duct communicating with more than one cylinder, or all cylinders. The fuel provision means 111 communicate with the fuel tank 11, via a fuel pump 121.

In addition, the control unit 109 is also adapted to determine the engine air flow based on signals received from an air flow sensor 114 located in the inlet duct 104. As an alternative, as is known in the art, the air flow can be computed based on parameters such as the inlet manifold pressure, throttle position, engine speed, inlet temperature, and atmospheric pressure. Manners of determining the values of these parameters are known in the art, and not explained further here.

Further, at each cylinder, ignition means 116 comprising a spark plug 116 are provided and controllable by the control unit 109.

The control unit 109 is adapted to determine the temperature of the catalytic converter 13 based at least partly on the air flow, the lambda value, the ambient temperature, engine load, and engine rotational speed. As an alternative, the control unit 109 can be adapted to receive signals from a temperature sensor located in the exhaust duct 106 between the cylinder 102 and the catalytic converter 13, or in the catalytic converter 13, based on which signals, the catalytic converter temperature can be determined.

The control unit 109 is further adapted to receive data corresponding to a state of charge (SOC) of the batteries 9 (fig. 1). In addition, the control unit 109 is adapted to adjust, as known in the art, the value of a requested torque parameter based on signals from an accelerator pedal 117 in the vehicle. Based at least partly on the SOC and the requested torque, the control unit 109 is adapted to determine whether the propulsion system 1 is to operate in a cruise mode, a battery charge mode, a power boost mode, or an electric vehicle mode, the latter being an engine off mode. Such operational modes have been briefly described above in the section "Background".

The control unit 109 is further adapted to control the output torque of the motor 3, The control unit 109 is also adapted to control, in manners known in the art, activators (not shown) in the transmissions 4, 6 for control of power paths therein. By suitable control of the motor 3, the transmissions 4, 6 and the engine, power paths in the propulsion system 1 can be controlled and operational modes of the propulsion system 1 can be chosen.

In the engine off mode, in dependence as described below on the catalytic converter 13 temperature, the control unit 109 is adapted to control the fuel provision means 111 and the ignition means 116 so that fuel injection and ignition are inhibited.

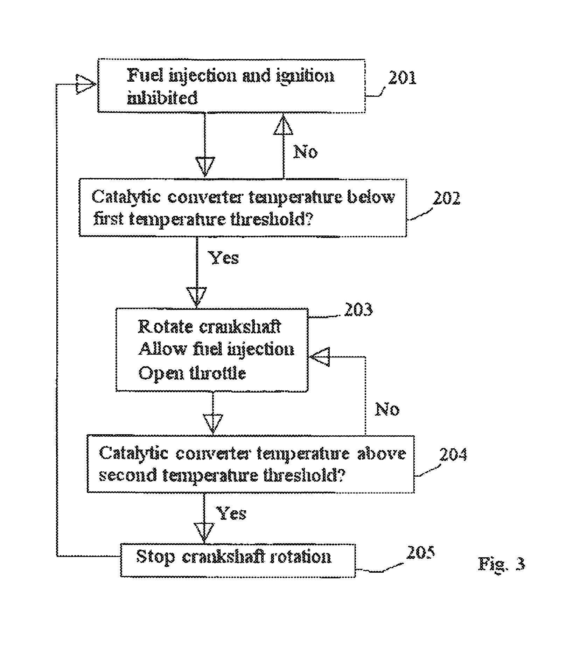

Fig. 3 depicts a method according to a preferred embodiment of the invention. The control unit 109 determines 201 based on the SOC and the requested torque that the propulsion system 1 is to operate in an electric vehicle mode, and fuel injection and ignition are inhibited. While fuel injection and ignition are inhibited, the catalytic converter 13 temperature is monitored. The control unit 109 determines 202 whether the catalytic converter 13 temperature is below a predetermined first temperature threshold value. If it is determined that the catalytic converter 13 temperature is not below the first temperature threshold value, the fuel injection and ignition remain inhibited.

If it is determined that the catalytic converter 13 temperature is below the first temperature threshold value, converter activation maintaining measures are taken 203, in which the ignition remains inhibited, but the motor 3 and the transmissions 4, 6 are controlled so that the crankshaft 131 is rotated by means of the motor 3. Also, fuel injection is allowed. In addition, the throttle valve 110 is controlled so as to be open. Thereby, by means of the piston 103 movement(s), air is pumped through the cyimder(s) 103, and air and fuel is transported from the cylinder(s) 102 and through the exhaust duct 106, in which a substantially homogenous air/fuel mixture is provided. The mixture reaches the catalytic converter 13 where it is combusted to increase the catalytic converter 13 temperature. Thereby, further decrease of the catalytic converter 13 temperature is prevented, and it can remain activated.

While the converter activation maintaining measures are taken, the catalytic converter 8 temperature is monitored. Thereby, the control unit 109 determines 204 whether the catalytic converter 13 temperature is above a predetermined second temperature threshold value, which is higher than the first temperature threshold value. If it is determined that the catalytic converter 13 temperature is not above the second temperature threshold value, the converter activation maintaining measures are continued 203. If it is determined that the catalytic converter 13 temperature is above the second temperature threshold value, the motor 3 and the transmissions 4, 6 are controlled 205 so that rotation of the crankshaft 131 stops and the fuel provision means 111 are controlled 201 so as to inhibit fuel injection. The control unit 109 continues to monitor the catalytic converter 13 temperature, and to determine 202 whether the catalytic converter 13 temperature is below the first temperature threshold value.

It should be noted that the invention is applicable to engines with any number of cylinders, i.e. one or more cylinders 102. In some embodiments of the invention, where the engine 2 has a plurality of cylinders 102, and the fuel injection can be controlled individually for each cylinder, the number of cylinders 102 into which fuel is allowed, while undertaking the converter activation maintaining measures, can be dependent on the temperature of the exhaust gas treatment device.

As an example, it can be assumed that the engine comprises four cylinders. During the converter activation maintaining measures, if the catalytic converter temperature is below a first temperature threshold value, fuel is injected into all cylinders. If the catalytic converter temperature is above a first temperature threshold value and below a second temperature threshold value, which is higher than the first temperature threshold value, fuel is injected in only two of the cylinders 102. If the catalytic converter temperature is above the second temperature threshold value, the converter activation maintaining measures are aborted. By controlling the number of cylinders in which fuel is injected during the converter activation maintaining measures, a coarse temperature control of the catalytic converter 13 is achieved.

Regardless of the number of cylinders in which fuel is injected during the converter activation maintaining measures, the amount of fuel injected in each cylinder can be controlled, so that a fine temperature control of the catalytic converter 13 is achieved. Additional or alternative temperature control can be provided by controlling the frequency of fuel injection pulses.

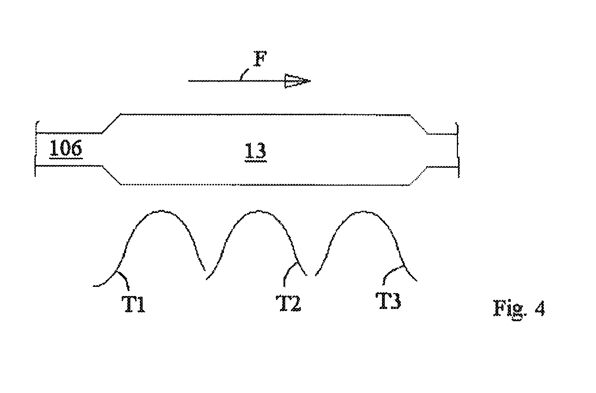

Reference is made to fig. 2 and 4. In some embodiments, the method comprises controlling the throttle valve 110 so as to control the combustion in the catalytic converter 13 during the converter activation maintaining measures. Based on the flow of fuel injected, the throttle is controlled so that a combustible air/fuel mixture is provided to the catalytic converter.

Referring to fig. 4, in which a gas flow direction is indicated with an arrow F, the throttle valve 110 is also used during the converter activation maintaining measures to control the location of a maximum temperature in the exhaust gas treatment device 13. By controlling the throttle valve 110 so that a relatively small air flow is provided, the air/fuel mixture will be combusted relatively far upstream in the catalytic converter 13. As a result, the temperature distribution in the catalytic converter, indicated in fig. 4 with the curve T1, will present a maximum relatively far upstream. By controlling the throttle valve 110 so that larger air flows are provided, the air/fuel mixture will be combusted further downstream in the catalytic converter 13. As a result, the temperature distribution in the catalytic converter, T2, T3, will present maximums further downstream, depending on the air flow. In other words, increasing the air flow will move the maximum temperature downstream.

Thus, the location of the maximum temperature can be changed during the converter activation maintaining measures, thereby securing that the temperature is kept above the activation temperature throughout the entire catalytic converter.

As an alternative to, or in addition to a throttle valve 110, the air flow control means can comprise control means 101, (fig. 2), for the inlet valve(s) 5 and/or the exhaust valve(s) 7, for example in the form of a variable valve timing (VVT) system and/or a cam profile shifting (CPS) system. Such inlet and/or exhaust valve control means can be used as an alternative or in addition to the throttle valve 110 for controlling the combustion in the catalytic converter 13 during the converter activation maintaining measures.

It should be noted that instead of the motor 3, the crankshaft 131 can rotated by means a further power source of the propulsion system 1.

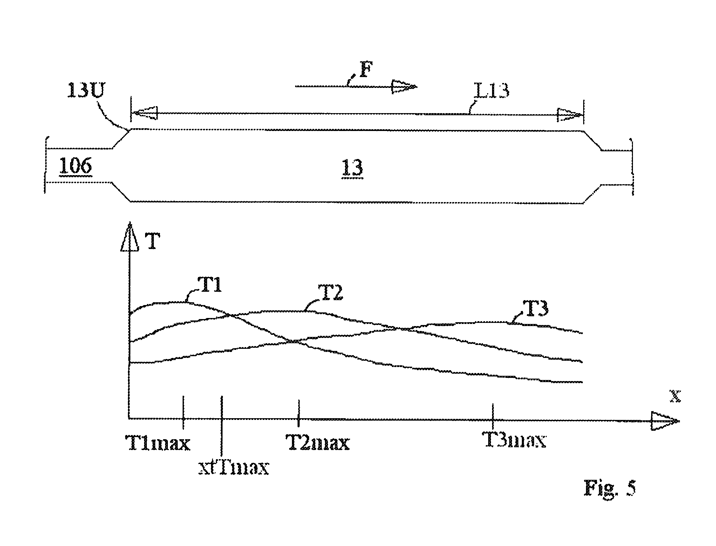

Fig. 5 shows another schematic view of the catalytic converter 13 in fig. 1, a gas flow direction being indicated with an arrow F. In an alternative to the temperature control described with reference to fig. 4, during the converter activation maintaining measures, the air flow control means 110 are controlled so that the air flow is reduced, preferably minimized, e.g. by the throttle valve 110 being closed, or at least kept relatively low. As will be understood, decreasing the fuel injected, while retaining a constant air flow, will move the maximum temperature downstream in the catalytic converter.

The fuel provision means 111 are used during the converter activation maintaining measures to control the location of a maximum temperature in the exhaust gas treatment device. By controlling the fuel provision means 111 so that a first, relatively rich air/fuel mixture is provided to the catalytic converter 13, a main portion of the mixture will be combusted relatively far upstream in the catalytic converter 13. As a result, a first temperature distribution in the catalytic converter, indicated in fig. 5 with the curve T1, will present a maximum, T1max, relatively far upstream.

The curve T2 shows a second temperature distribution during the converter activation maintaining measures, with the same air flow as in the case of the first temperature distribution T1, but where the fuel provision means 111 are controlled so that a second air/fuel mixture, leaner than the first air/fuel mixture, is provided to the catalytic converter 13. As a result, the mixture will mainly be combusted further downstream in the catalytic converter 13, with a maximum temperature, T2max, further downstream than the maximum temperature, T1max, of the first temperature distribution T1.

Finally, by controlling the fuel provision means 111, with the same air flow as in the case of the first and second temperature distributions T1, T2, to obtain a third air/fuel mixture, being leaner than the second air/fuel mixture, the mixture will be mainly combusted even further downstream in the catalytic converter 13. As a result, the temperature distribution T3 in the catalytic converter will present a maximum, T3max, further downstream.

Thus, the location of the maximum temperature can be changed, during the converter activation maintaining measures.

Referring to fig. 5, preferably, the fuel injection is controlled so that the location of the maximum temperature is not upstream of a threshold location, xtTmax, the distance between the threshold location and the upstream end 13u of the catalytic converter 13 is at least twenty percent of the extension L13 of the catalytic converter 13 in the exhaust flow direction F.

The temperature distribution control method described with reference to fig. 5, involves adjusting the fuel injected, while retaining a constant air flow, to move the maximum temperature downstream in the catalytic converter. It should be noted that in addition to the fuel control, the air flow can be adjusted during the converter activation maintaining measures, in order to control the catalytic converter temperature distribution. In such an embodiment, the throttle valve 110 can be used during the converter activation maintaining measures to control the location of a maximum temperature in the exhaust gas treatment device. As mentioned above with reference to fig. 4, by controlling the throttle valve 110 so that a relatively small air flow is provided, the air/fuel mixture will be combusted relatively far upstream in the catalytic converter 13. By controlling the throttle valve 110 so that larger air flows are provided, the air/fuel mixture will be combusted further downstream in the catalytic converter 13. In other words, increasing the air flow will move the maximum temperature downstream.

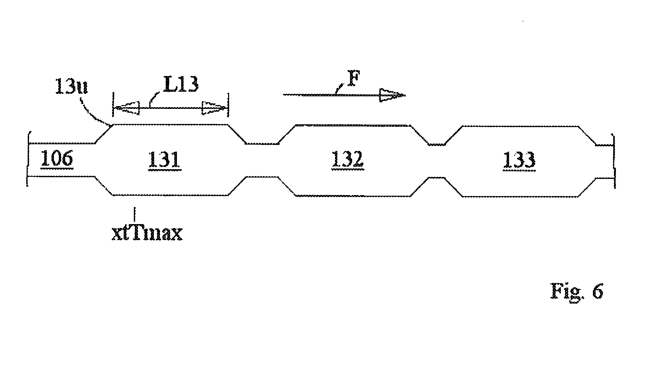

Fig. 6 shows schematically an alternative exhaust gas treatment device comprising three catalyst monoliths 131, 132, 133, of which an upstream monolith 131 is located closest to the engine opposite to an exhaust flow direction F. Similarly to what was suggested above, during converter activation maintaining measures, the fuel injection is controlled so that the location of the maximum temperature is not upstream of a threshold location, xtTmax, The threshold location is determined such that the distance between the threshold location, xtTmax, and an upstream end 13u of the upstream monolith 131 is at least twenty percent of the extension L13 of the upstream monolith in the exhaust flow direction F.

During the converter activation maintaining measures, in order to control the catalytic converter temperature distribution, the air flow control means and/or the fuel provision means can be controlled dependent at least partly on a model stored by the control unit 109 for a temperature distribution in the catalytic converter. The model can be based on parameters such as the air/fuel mixture, engine speed, air flow, ignition timing, and VVT-setting. As an alternative, during the converter activation maintaining measures, the air flow control means and/or the fuel provision means can be controlled, in order to control the catalytic converter temperature distribution, at least partly in dependence on signals from a plurality of temperature sensors distributed so as to detect the temperature at locations along me catalytic converter.

Embodiments of a method for controlling, during converter activation maintaining measures, the air flow control means and/or the fuel provision means based at least partly on a desired temperature distribution in the catalytic converter has been presented. As understood by the person skilled in the art, the mapping of air/fuel ratios to catalytic converter temperature distributions can be done in a test environment, and can involve adjusting the air/fuel ratio while monitoring the catalytic converter temperature distribution.

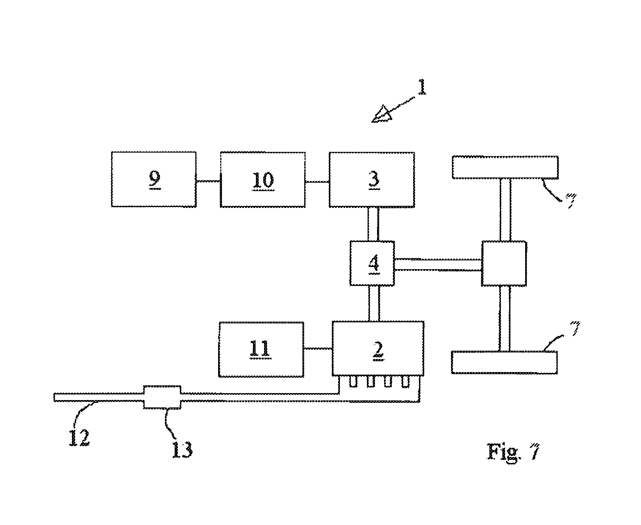

Referring to fig. 7, showing parts of a hybrid vehicle propulsion system 1 with a parallel hybrid structure, an alternative embodiment, of the invention will be described. The propulsion system 1 comprises an internal combustion engine 2 and an additional power source 3 in the form of a combined electric motor and generator 3. The combined motor and generator 3 is via a converter 10 electrically connected to an energy storage unit 9 comprising a plurality of batteries. Fuel storage means 11 comprising a fuel tank 11, and an exhaust system 12 with an exhaust treatment device 13 in the form of a catalytic converter 13 are provided for the engine 2.

A transmission 4 provides in a manner known in the art a mechanical connection between the engine 2, the combined motor and generator 3 and two wheels 7 of the vehicle. The transmission 4 is controllable as described below and works as power split devices to allow the power path from the engine 2 to be mechanically directed to the wheels 7, or to the combined motor and generator 3. The transmission 4 also allows mechanical power from the combined motor and generator 3 to be directed to the engine 2, as discussed closer below.

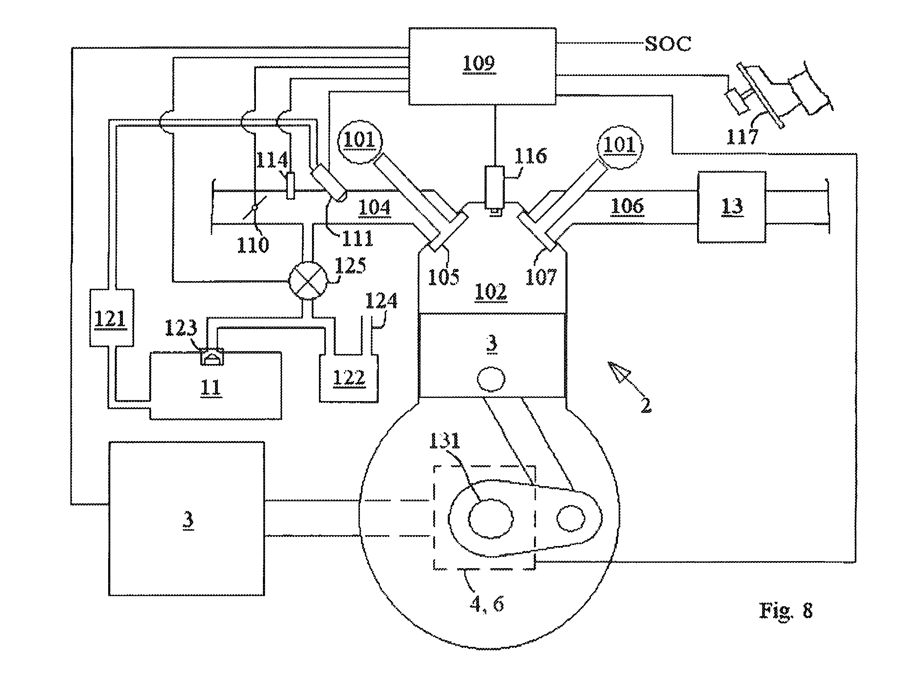

Fig. 8 shows schematically certain of the hybrid vehicle propulsion system parts in fig. 7 in some detail, which parts correspond to the ones described above with reference to fig, 2, except for the following details: The engine system is provided with a fuel vapor retainer in the form of a canister 122, which could enclose carbon for retaining vaporized fuel as known in the art. The canister 122 can communicate with the fuel tank 11 via a vapor vent valve 123. Further, the canister 122 is provided with a canister air inlet 124. The canister 122 and the fuel tank 11 can communicate with the inlet duct 4 via purge gas control means comprising a purge gas supply valve 125, which is controllable by the control unit 109.

Alternatively, or in addition, the purge gas control means can comprise a purge gas supply pump controllable by the control unit, and adapted to pump purge gas (fuel vapors) from the canister 122 and/or the fuel tank 11 to the inlet duct 4, as described in EP07150375.9, filed by the applicant and incorporated herein by reference.

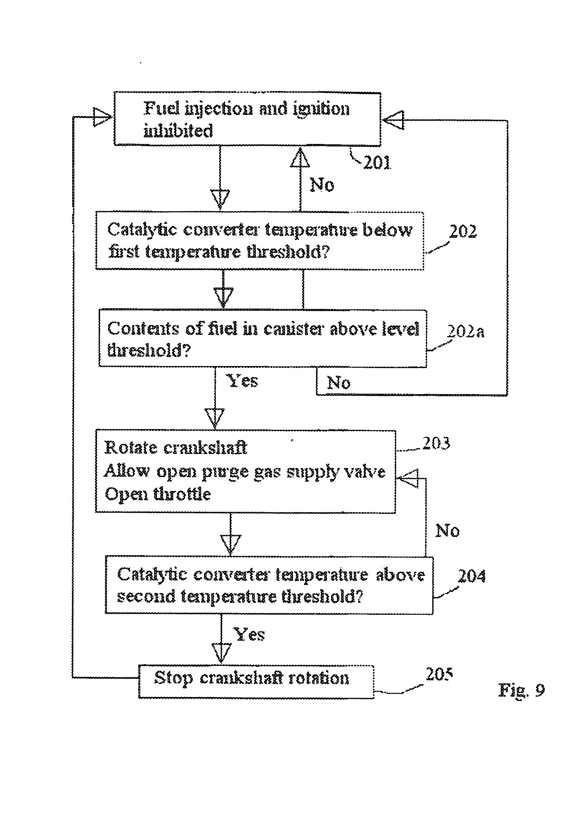

Fig. 9 depicts a method according to the alternative embodiment of the invention, in the hybrid vehicle propulsion system 1 in fig. 7. The method corresponds to the one that has been described above with reference to fig. 3, with some exceptions:

As in fig. 3, the control unit 109 determines 201 that the propulsion system I is to operate in an electric vehicle mode, and the catalytic converter 13 temperature is monitored. If it is determined 202 that the catalytic converter 13 temperature is below a first temperature threshold value, it is determined 202a whether me contents of fuel in the canister 122 is above a predetermined canister level threshold value. The contents of the canister 122 can be determined as is known in the art, for example based on measured values of lambda, injected fuel and air flow. If it is determined 202a that the contents of fuel in the canister 122 is below the threshold value, it is determined that no or alternative converter activation maintaining measures are carried out.

If it is determined 202a that the contents of fuel in the canister 122 is above the threshold value, converter activation maintaining measures are taken 203, in which the ignition remains inhibited, but the motor 3 and the transmission 4 is controlled so that the crankshaft 131 is rotated by means of the combined motor and generator 3. Also, the purge gas supply valve 125 is controlled so that fuel from the canister 122 is allowed into the inlet duct 104 so as to mix with air, allowed by the open throttle valve 110, Thereby, by means of the piston 103 movement(s), air and fuel are pumped through the cylinder(s) 103, and transported through the exhaust duct 106, in which a air/fuel mixture is provided, which reaches the catalytic converter 13 where it is combusted to increase the catalytic converter 13 temperature.

As in fig. 3, while the converter activation maintaining measures are taken, the control unit 109 determines 204 whether the catalytic converter 13 temperature is above a predetermined second temperature threshold value, which is higher than the first temperature threshold value, and if it is determined that the catalytic converter 13 temperature is above the second temperature threshold value, the motor 3 and the transmissions 4, 6 are controlled 205 so that rotation of the crankshaft 131 stops.

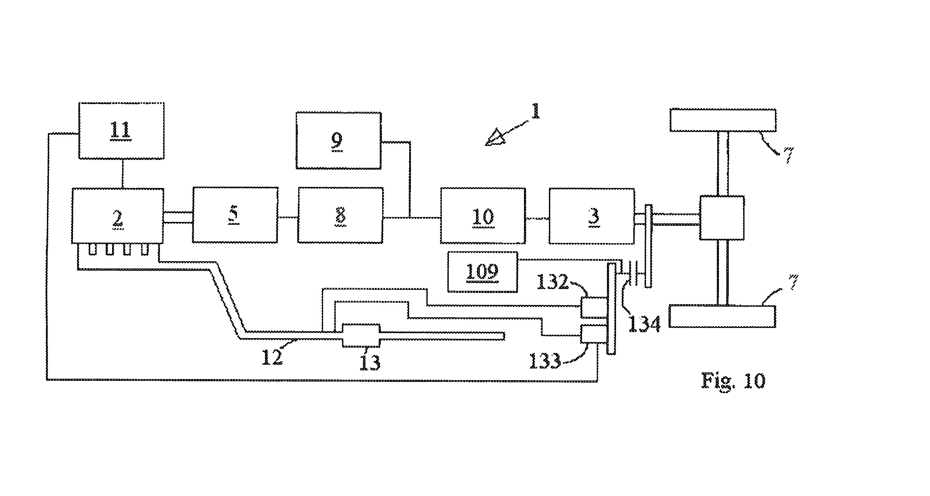

Referring to fig. 10, showing parts of a hybrid vehicle propulsion system 1 with a series hybrid structure, a further alternative embodiment of the invention will be described. The propulsion system 1 comprises an internal combustion engine 2 and an additional power source 3 in the form of an electric motor 3, The engine 2 is mechanically connected to a generator 5m which is electrically connected to a charger 8, which in turn is connected to a plurality of batteries 9, and to a converter 10, the latter being connected to the motor 3, which is mechanically connected to two wheels 7 of the vehicle. Fuel storage means 11 comprising a fuel tank 11, and an exhaust system 12 with an exhaust treatment device 13 in the form of a catalytic converter 13 are provided for the engine 2.

The propulsion system 1 comprises an air pump 132 and a fuel pump 133 adapted to supply air and fuel into the exhaust system 12 upstream from the catalytic converter 13, The fuel pump is adapted to be fed from the fuel tank 11, The air pump 132 and the fuel pump are adapted to be driven by the motor 3 via a mechanical connection, including for example belt drives, and also a clutch 134, controllable, by a control unit 109 for engagement and disengagement of the pumps 132, 133 with the motor 3.

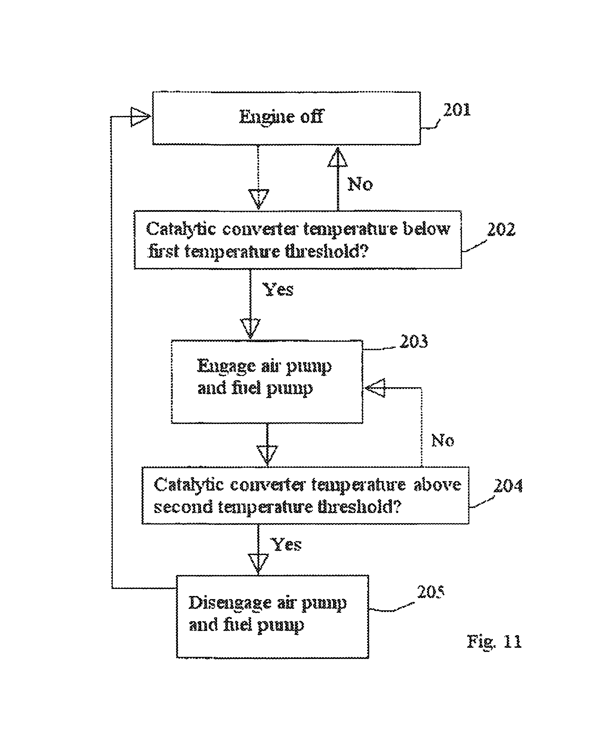

Fig. 11 depicts a method according to the further alternative embodiment of the invention, in the hybrid vehicle propulsion system 1 in fig. 10. The method corresponds to the one that has been described above with reference to fig. 3, with some exceptions:

The control unit 109 determines 201 that the propulsion system 1 is to operate in a mode in which the engine is off. As in fig. 3, the catalytic converter 13 temperature is monitored by the control device 109. If it is determined 202 that the catalytic converter 13 temperature is below a first temperature threshold value, converter activation maintaining measures are taken 203, in which the clutch 134 is controlled 203 so as to engage the pumps 132, 133. Thereby, air and fuel are introduced into the exhaust system 12 to form a mixture, which reaches the catalytic converter 13 where it is combusted to increase the catalytic converter 13 temperature,

As in fig. 3, while the converter activation maintaining measures are taken, the control unit 109 determines 204 whether the catalytic converter 13 temperature is above a predetermined second temperature threshold value, which is higher than the first temperature threshold value, and if it is determined that the catalytic converter 13 temperature is above the second temperature threshold value, the clutch 134 is controlled 205 so as to disengage the pumps 132, 133.

It should be noted that instead of the motor 3, the air pump 132 and the fuel pump 133 in fig. 10 could be driven by some alternative driving device of the propulsion system 1.

The invention is of course also applicable to hybrid vehicles combining more than two power sources for its propulsion, one of them being an internal combustion engine.

Above, embodiments with spark ignition internal combustion engines have been described, but it should be noted that the invention is applicable to hybrid vehicle propulsion systems with alternative types of internal combustion engines, for example diesel engines. For a diesel engine, converter activation maintaining measures could for example involve, while the crankshaft is being rotated by the additional power source, injecting fuel during an exhaust stroke in the respective cylinder, i.e. when the respective exhaust valve(s) is (are) open.

## Claims

1. A method for an exhaust gas treatment device (13,131,132, 133) for an internal combustion engine (2) in a hybrid vehicle further comprising an additional power source (3), the internal combustion engine (2) comprising a crankshaft (131) and at least one cylinder (102), the hybrid vehicle further comprising fuel storage means (11) and fuel provision means (111,122,125, 133), the exhaust gas treatment device (13. 131, 132, 133) being located downstream of the cylinder (102), comprising in an engine off mode, pumping air (203) to the exhaust gas treatment device (13, 131, 132, 133), controlling (203) the fuel provision means (111, 122, 125, 133) so that fuel is allowed to the exhaust gas treatment device (13, 131, 132, 133), **characterized in that** the method further comprises controlling air flow control means (101, 105, 107, 110, 132) and/or the fuel provision means (111, 122, 125, 133) so as to control the combustion in the exhaust gas treatment device (13, 131, 132, 133).

2. A method according to claim 1, wherein controlling the combustion in the exhaust gas treatment device (13, 131, 132, 133) comprises controlling a location or a region of a maximum temperature in the exhaust gas treatment device (13, 131, 132, 133).

3. A method according to claim 2, wherein the exhaust gas treatment device comprises at least one catalyst monolith (131, 132, 133), of which an upstream monolith (131) is located furthest upstream in the exhaust system, and wherein controlling a location or a region of a maximum temperature in the exhaust gas treatment device (131, 132, 133) comprises controlling the air flow control means (101, 105, 107, 110, 132) and/or the fuel provision means (111, 122, 125, 133) so that the location in the exhaust gas treatment device (131, 132, 133) of the maximum temperature (T1max, T2max, T3max) is downstream of an upstream end (13u) of the upstream monolith (131).

4. A method according to claim 3, wherein the air flow control means (101, 105, 107, 110, 132) and/or the fuel provision means (111, 122, 125, 133) are controlled so that the location in the exhaust gas treatment device (131, 132, 133) of the maximum temperature (T1max, T2max, T3max) is not upstream of a threshold location, the distance between the threshold location (xtTmax) and an upstream end (13u) of the upstream monolith (131) being at least twenty percent of the extension (L13) of the upstream monolith (131) in an exhaust flow direction (F).

5. A method according to claim 4, wherein the distance between the threshold location (xtTmax) and the upstream end (13u) of the upstream monolith (131) is at least fifty percent of the extension (L13) of the upstream monolith (131) in an exhaust flow direction (F).

6. A method according to any of the preceding claims, wherein the step of pumping air (203) to the exhaust gas treatment device (13, 131, 132, 133) comprises rotating the crankshaft (131) of the engine (2) by means of the additional power source (3).

7. A method according to any of the preceding claims, wherein the step of pumping air (203) to the exhaust gas treatment device (13, 131, 132, 133) comprises rotating the crankshaft (131) of the engine (2) by means of the additional power source (3), the fuel provision means (122, 125) comprises purge gas control means (125) for controlling a supply of purge gas from a fuel vapor retainer (122) to the engine (2), and the step of controlling (203) the fuel provision means comprises controlling the purge gas control means (125) so that purge gas is allowed into at least one of the cylinders (102).

8. A method according to any of the preceding claims, wherein the step of pumping air to the exhaust gas treatment device (13, 131, 132, 133) comprises supplying air downstream of the at least one cylinder (102).

9. A method according to any of the preceding claims, wherein the step of controlling the fuel provision means (133) comprises supplying fuel downstream of the at least one cylinder (102).

10. A method according to any of the preceding claims, comprising controlling the air flow control means (101,105,107,110, 132) and the fuel provision means (111, 122, 125, 133) so as to provide a mixture to the exhaust gas treatment device (13, 131, 132, 133) with a lambda value of at least 1.0.

11. A method according to claim 10, wherein the lambda value of the mixture provided to the exhaust gas treatment device (13, 131, 132, 133) is not lower than 1.25 and not higher than 2.0.

12. 4 method according to any of the claims 1 to 11, **characterized in that** the fuel provision means (111, 122, 125) are for the engine (2), and **in that** the method comprises, in the engine off mode, pumping air (203) to the exhaust gas treatment device (13, 131, 132, 133) by rotating the crankshaft (131) of the engine (2) by means of the additional power source (3), controlling (203) the fuel provision means (111, 122, 125) so that fuel is allowed into at least one of the cylinders (102) so as to allow fuel to the exhaust gas treatment device (13, 131, 132, 133), and controlling the air flow control means (101, 105, 107, 110) so as to control the combustion in the exhaust gas treatment device (13, 131, 132, 133).

13. A method according to claim 12, wherein controlling the combustion in the exhaust gas treatment device (13, 131, 132, comprises controlling a location or a region of a maximum temperature in the exhaust gas treatment device (13, 131,132, 133).

14. A hybrid vehicle propulsion system (1) comprising an internal combustion engine (2) and an additional power source (3), the internal combustion engine (2) comprising a crankshaft (131) and at least one cylinder (102), the hybrid vehicle propulsion system further comprising fuel storage means (11), fuel provision means (111, 122, 125, 133), an exhaust gas treatment device (13, 131, 132, 133) being located downstream of the cylinder (102), and a control Unit (109), in an engine off mode, pump air (203) to the exhaust gas treatment device (13, 31, 132, 133), and in that the control unit (109) is adapted to control (203), in the engine off mode and while air is pumped (203) to the exhaust gas treatment device (13, 131, 132, 133), the fuel provision means (111, 122, 125, 133) so that fuel is allowed to the exhaust gas treatment device (13, 131, 132, 133), **characterized in that** it is further the system being adapted to, simultaneously control air flow control means (101, 105, 107, 110, 132) so as to control the combustion in the exhaust gas treatment device 13, 131,132,133).

15. A hybrid vehicle propulsion system (1) according to claim 14, **characterized in that** the fuel provision means (111, 122, 125) are for the engine (2), **in that** the system is adapted to, in the engine off mode, pump air (203) to the exhaust gas treatment device (13, 131, 132,133) by rotating the crankshaft (131) of the engine (2) by means of the additional power source (3), and **in that** the control unit (109) is adapted to control (203), in the engine off mode and while the hybrid vehicle propulsion system pumps air (203) to the exhaust gas treatment device (13, 131,132,133) by rotating the crankshaft (131) of the engine (2) by means of the additional power source (3), the fuel provision means (111, 122, 125) so that fuel is allowed into at least one of the cylinders (102) so as for fuel to be allowed to the exhaust gas treatment device (13, 131,132, 133), and to simultaneously control the air flow control means (101, 105, 107, 110, 132) so as to control the combustion in the exhaust gas treatment device (13,131, 132,133).

16. A system according to claim 15, wherein the control unlit (109) is adapted to control the combustion in the exhaust gas treatment device (13, 131, 132, 133) by controlling a location or a region of a maximum temperature in the exhaust gas treatment device (13, 131, 132, 133).

17. A hybrid vehicle comprising a propulsion system according to any of the claims 14-16.

## Patentansprüche

1. Verfahren für eine Abgasbehandlungsvorrichtung (13, 131, 132, 133) für eine Brennkraftmaschine (2) in einem Hybridfahrzeug, das ferner eine zusätzliche Leistungsquelle (3) umfasst, wobei die Brennkraftmaschine (2) eine Kurbelwelle (131) und wenigstens einen Zylinder (102) umfasst, wobei das Hybridfahrzeug ferner Kraftstoffspeichermittel (11) und Kraftstoffbereitstellungsmittel (111, 122, 125, 133) umfasst, wobei sich die Abgasbehandlungsvorrichtung (13, 131, 132, 133) stromabseitig des Zylinders (102) befindet, wobei das Verfahren ferner in einer Maschinenabschalt-Betriebsart das Pumpen von Luft (203) zu der Abgasbehandlungsvorrichtung (13, 131, 132, 133) und das Steuern (203) der Kraftstoffbereitstellungsmittel (111, 122, 125, 133), derart, dass die Zufuhr von Kraftstoff zu der Abgasbehandlungsvorrichtung (13, 131, 132, 133) zugelassen wird, umfasst, **dadurch gekennzeichnet, dass** das Verfahren Luftdurchfluss-Steuermittel (101, 105, 107, 110, 132) und/oder die Kraftstoffbereitstellungsmittel (111, 122, 125, 133) steuert, um die Verbrennung in der Abgasbehandlungsvorrichtung (13, 131, 132, 133) zu steuern.

2. Verfahren nach Anspruch 1, wobei die Steuerung der Verbrennung in der Abgasbehandlungsvorrichtung (13, 131, 132, 133) das Steuern eines Ortes oder eines Bereichs mit maximaler Temperatur in der Abgasbehandlungsvorrichtung (13, 131, 132, 133) umfasst.

3. Verfahren nach Anspruch 2, wobei die Abgasbehandlungsvorrichtung wenigstens einen Katalysator-Monolithen (131, 132, 133) umfasst, wovon sich ein stromaufseitiger Monolith (131) am weitesten stromaufseitig im Abgassystem befindet, und wobei das Steuern eines Ortes oder eines Bereichs mit maximaler Temperatur in der Abgasbehandlungsvorrichtung (131, 132, 133) das Steuern der Luftdurchfluss-Steuermittel (101, 105, 107, 110, 132) und/oder der Kraftstoffbereitstellungsmittel (111, 122, 125, 133) umfasst, derart, dass sich der Ort in der Abgasbehandlungsvorrichtung (131, 132, 133) mit maximaler Temperatur (T1max, T2max, T3max) stromabseitig eines stromaufseitigen Endes (13u) des stromaufseitigen Monolithen (131) befindet.

4. Verfahren nach Anspruch 3, wobei die Luftdurchfluss-Steuermittel (101, 105, 107, 110, 132) und/oder die Kraftstoffbereitstellungsmittel (111, 122, 125, 133) in der Weise gesteuert werden, dass sich der Ort in der Abgasbehandlungsvorrichtung (131, 132, 133) mit der maximalen Temperatur (T1max, T2max, T3max) nicht stromaufseitig eines Grenzortes befindet, wobei der Abstand zwischen dem Grenzort (xtTmax) und einem stromaufseitigen Ende (13u) des stromaufseitigen Monolithen (131) wenigstens zwanzig Prozent der Ausdehnung (L13) des stromaufseitigen Monolithen (131) in einer Abgasströmungsrichtung (F) beträgt.

5. Verfahren nach Anspruch 4, wobei der Abstand zwischen dem Grenzort (xtTmax) und dem stromaufseitigen Ende (13u) des stromaufseitigen Monolithen (131) wenigstens fünfzig Prozent der Ausdehnung (L13) des stromaufseitigen Monolithen (131) in der Abgasströmungsrichtung (F) beträgt.

6. Verfahren nach einem der vorhergehenden Ansprüche, wobei der Schritt des Pumpens von Luft (203) zu der Abgasbehandlungsvorrichtung (13, 131, 132, 133) das Drehen der Kurbelwelle (131) der Maschine (2) mittels der zusätzlichen Leistungsquelle (3) umfasst.

7. Verfahren nach einem der vorhergehenden Ansprüche, wobei der Schritt des Pumpens von Luft (203) zu der Abgasbehandlungsvorrichtung (13, 131, 132, 133) das Drehen der Kurbelwelle (131) der Maschine (2) mittels der zusätzlichen Leistungsquelle (3) umfasst, die Kraftstoffbereitstellungsmittel (122, 125) Spülgas-Steuermittel (125) zum Steuern einer Zufuhr von Spülgas von einem Kraftstoffdampfbehälter (122) zu der Maschine (2) umfasst und der Schritt des Steuerns (203) der Kraftstoffbereitstellungsmittel das Steuern der Spülgas-Steuermittel (125), derart, dass Spülgas in wenigstens einen der Zylinder (102) strömen kann, umfasst.

8. Verfahren nach einem der vorhergehenden Ansprüche, wobei der Schritt des Pumpens von Luft zu der Abgasbehandlungsvorrichtung (13, 131, 132, 133) das Zuführen von Luft stromabseitig des wenigstens einen Zylinders (102) umfasst.

9. Verfahren nach einem der vorhergehenden Ansprüche, wobei der Schritt des Steuerns der Kraftstoffbereitstellungsmittel (133) das Zuführen von Kraftstoff stromabseitig des wenigstens einen Zylinders (102) umfasst.

10. Verfahren nach einem der vorhergehenden Ansprüche, das das Steuern der Luftdurchfluss-Steuermittel (101, 105, 107, 110, 132) und der Kraftstoffbereitstellungsmittel (111, 122, 125, 133) umfasst, um für die Abgasbehandlungsvorrichtung (13, 131, 132, 133) ein Gemisch mit einem Lambdawert von wenigstens 1,0 bereitzustellen.

11. Verfahren nach Anspruch 10, wobei der Lambdawert des Gemisches, der für die Abgasbehandlungsvorrichtung (13, 131, 132, 133) bereitgestellt wird, nicht niedriger als 1,25 und nicht höher als 2,0 ist.

12. Verfahren nach einem der Ansprüche 1 bis 11, **dadurch gekennzeichnet, dass** die Kraftstoffbereitstellungsmittel (111, 122, 125) für die Maschine (2) vorgesehen sind und dass das Verfahren in der Maschinenabschalt-Betriebsart das Pumpen von Luft (203) zu der Abgasbehandlungsvorrichtung (13, 131, 132, 133) durch Drehen der Kurbelwelle (131) der Maschine (2) mittels der zusätzlichen Leistungsquelle (3), das Steuern (203) der Kraftstoffbereitstellungsmittel (111, 122, 125), so dass Kraftstoff in wenigstens einen der Zylinder (102) strömen kann, damit Kraftstoff zu der Abgasbehandlungsvorrichtung (111, 122, 125, 133) strömen kann, und das Steuern der Luftdurchfluss-Steuermittel (101, 105, 107, 110, 132), um die Verbrennung in der Abgasbehandlungsvorrichtung (13, 131, 132, 133) zu steuern, umfasst.

13. Verfahren nach Anspruch 12, wobei das Steuern der Verbrennung in der Abgasbehandlungsvorrichtung (13, 131, 132, 133) das Steuern eines Ortes oder eines Bereichs mit einer maximalen Temperatur in der Abgasbehandlungsvorrichtung (13, 131, 132, 133) umfasst.

14. Hybridfahrzeug-Antriebssystem, das eine Brennkraftmaschine (2) und eine zusätzliche Leistungsquelle (3) umfasst, wobei die Brennkraftmaschine (2) eine Kurbelwelle (131) und wenigstens einen Zylinder (102) umfasst, wobei das Hybridfahrzeug-Antriebssystem ferner Kraftstoffspeichermittel (11), Kraftstoffbereitstellungsmittel (111, 122, 125, 133), eine Abgasbehandlungsvorrichtung (13, 131, 132, 133), die sich stromabseitig des Zylinders (102) befindet, und eine Steuereinheit (109) umfasst, wobei das System dazu ausgelegt ist, in einer Maschinenabschalt-Betriebsart Luft (203) zu der Abgasbehandlungsvorrichtung (13, 131, 132, 133) zu pumpen, wobei die Steuereinheit (109) dazu ausgelegt ist, in der Maschinenabschalt-Betriebsart, während Luft zu der Abgasbehandlungsvorrichtung (13, 131, 132, 133) gepumpt wird (203), die Kraftstoffbereitstellungsmittel (111, 122, 125, 133) in der Weise zu steuern (203), dass Kraftstoff zu der Abgasbehandlungsvorrichtung (13, 131, 132, 133) strömen kann, **dadurch gekennzeichnet, dass** es ferner dazu ausgelegt ist, gleichzeitig Luftdurchfluss-Steuermittel (101, 105, 107, 110, 132) zu steuern, um die Verbrennung in der Abgasbehandlungsvorrichtung (13, 131, 132, 133) zu steuern.

15. Hybridfahrzeug-Antriebssystem (1) nach Anspruch 14, **dadurch gekennzeichnet, dass** die Kraftstoffbereitstellungsmittel (111, 122, 125) für die Maschine (2) vorgesehen sind, dass das System dazu ausgelegt ist, in der Maschinenabschalt-Betriebsart Luft (203) zu der Abgasbehandlungsvorrichtung (13, 131, 132, 133) zu pumpen, indem die Kurbelwelle (131) der Maschine (2) mittels der zusätzlichen Leistungsquelle (3) gedreht wird, und dass die Steuereinheit (109) dazu ausgelegt ist, in der Maschinenabschalt-Betriebsart, während das Hybridfahrzeug-Antriebssystem durch Drehen der Kurbelwelle (131) der Maschine (2) mittels der zusätzlichen Leistungsquelle (3) Luft (203) zu der Abgasbehandlungsvorrichtung (13, 131, 132, 133) pumpt, die Kraftstoffbereitstellungsmittel (111, 122, 125) in der Weise zu steuern (203), dass Kraftstoff in wenigstens einen der Zylinder (102) strömen kann, so dass Kraftstoff zu der Abgasbehandlungsvorrichtung (13, 131, 132, 133) strömen kann, und gleichzeitig die Luftdurchfluss-Steuermittel (101, 105, 107, 110, 132) in der Weise zu steuern, dass die Verbrennung in der Abgasbehandlungsvorrichtung (13, 131, 132, 133) gesteuert wird.

16. System nach Anspruch 15, wobei die Steuereinheit (109) dazu ausgelegt ist, die Verbrennung in der Abgasbehandlungsvorrichtung (13, 131, 132, 133) durch Steuern eines Ortes oder eines Bereichs mit einer maximalen Temperatur in der Abgasbehandlungsvorrichtung (13, 131, 132, 133) zu steuern.

17. Hybridfahrzeug, das ein Antriebssystem nach einem der Ansprüche 14-16 umfasst.

## Revendications

1. Procédé, pour un dispositif de traitement des gaz d'échappement (13, 131, 132, 133) pour un moteur à combustion interne (2) dans un véhicule hybride, comprenant en outre une source d'énergie additionnelle (3), le moteur à combustion interne (2) comprenant un vilebrequin (131) et au moins un cylindre (102), le véhicule hybride comprenant en outre des moyens de stockage de carburant (11) et des moyens de fourniture en carburant (111, 122, 125, 133), le dispositif de traitement des gaz d'échappement (13, 131, 132, 133) étant installé en aval du cylindre (102), comprenant, dans un mode à moteur thermique à l'arrêt, le pompage d'air (203) vers le dispositif de traitement des gaz d'échappement (13, 131, 132, 133), la commande (203) des moyens de fourniture en carburant (111, 122, 125, 133), de manière que du carburant soit autorisé à passer au dispositif de traitement des gaz d'échappement (13, 131, 132, 133), **caractérisé en ce que** le procédé comprend en outre la commande de moyens de commande d'écoulement d'air (101, 105, 107, 110, 132) et/ou des moyens de fourniture en carburant (111, 122, 125, 133), de manière à commander la combustion dans le dispositif de traitement des gaz d'échappement (13, 131, 132, 133).

2. Procédé selon la revendication 1, dans lequel la commande de la combustion dans le dispositif de traitement des gaz d'échappement (13, 131, 132, 133) comprend la commande d'un emplacement ou d'une région à température maximale dans le dispositif de traitement des gaz d'échappement (13, 131, 132, 133).

3. Procédé selon la revendication 2, dans lequel le dispositif de traitement des gaz d'échappement comprend au moins un monolithe catalyseur (131, 132, 133), dont un monolithe amont (131) est disposé le plus possible en amont dans le système d'échappement, et dans lequel la commande d'un emplacement ou d'une région à température maximale dans le dispositif de traitement des gaz d'échappement (131, 132, 133) comprend la commande des moyens de commande d'écoulement d'air (101, 105, 107, 110, 132) et/ou des moyens de fourniture en carburant (111, 122, 125, 133), de manière que l'emplacement, dans le dispositif de traitement des gaz d'échappement (131, 132, 133), présentant la température maximale (T1max, T2max, T3max) se trouve en aval d'une extrémité amont (13u) du monolithe amont (131).

4. Procédé selon la revendication 3, dans lequel les moyens de commande d'écoulement d'air (101, 105, 107, 110, 132) et/ou les moyens de fourniture en carburant (111, 122, 125, 133) sont commandés de manière que l'emplacement, dans le dispositif de traitement des gaz d'échappement (131, 132, 133), présentant la température maximale (T1max, T2max, T3max) ne se trouve pas en amont d'un emplacement seuil, la distance entre l'emplacement seuil (xtTmax) et une extrémité amont (13u) du monolithe amont (131) étant d'au moins vingt pourcents de l'étendue (L13) du monolithe amont (131) dans une direction d'écoulement d'échappement (F).

5. Procédé selon la revendication 4, dans lequel la distance entre l'emplacement seuil (xtTmax) et l'extrémité amont (13u) du monolithe amont (131) est d'au moins cinquante pourcents de l'étendue (L13) du monolithe amont (131) dans une direction d'écoulement d'échappement (F).

6. Procédé selon l'une quelconque des revendications précédentes, dans lequel l'étape de pompage d'air (203) vers le dispositif de traitement des gaz d'échappement (13, 131, 132, 133) comprend la rotation du vilebrequin (131) du moteur thermique (2) au moyen de la source d'énergie additionnelle (3).

7. Procédé selon l'une quelconque des revendications précédentes, dans lequel l'étape de pompage d'air (203) vers le dispositif de traitement des gaz d'échappement (13, 131, 132, 133) comprend la rotation du vilebrequin (131) du moteur thermique (2) au moyen de la source d'énergie additionnelle (3), les moyens de fourniture en carburant (122, 125) comprennent des moyens de commande de gaz de purge (125), pour commander une fourniture de gaz de purge à partir d'un rétenteur de vapeur de carburant (122) vers le moteur thermique, et l'étape de commande (203) des moyens de fourniture en carburant comprend la commande des moyens de commande de gaz de purge (125), de manière que du gaz de purge soit autorisé à pénétrer dans au moins l'un des cylindres (102).

8. Procédé selon l'une quelconque des revendications précédentes, dans lequel l'étape de pompage d'air vers le dispositif de traitement des gaz d'échappement (13, 131, 132, 133) comprend la fourniture d'air en aval du au moins un cylindre (102).

9. Procédé selon l'une quelconque des revendications précédentes, dans lequel l'étape de commande des moyens de fourniture en carburant (133) comprend la fourniture en carburant, en aval du au moins un cylindre (102).

10. Procédé selon l'une quelconque des revendications précédentes, comprenant la commande des moyens de commande d'écoulement d'air (101, 105, 107, 110, 132) et des moyens de fourniture en carburant (111, 122, 125, 133), de manière à fournir au dispositif de traitement des gaz d'échappement (13, 131, 132, 133) un mélange ayant une valeur lambda d'au moins 1,0.

11. Procédé selon la revendication 10, dans lequel la valeur lambda du mélange fourni au dispositif de traitement des gaz d'échappement (13, 131, 132, 133) n'est pas inférieure à 1,25 et pas supérieure à 2,0.

12. Procédé selon l'une quelconque des revendications 1 à 11, **caractérisé en ce que** les moyens de fourniture en carburant (111, 122, 125) sont prévus pour le moteur thermique (2), et **en ce que** le procédé comprend, dans le mode à moteur thermique à l'arrêt, le pompage d'air (203) vers le dispositif de traitement des gaz d'échappement (13, 131, 132, 133), par rotation du vilebrequin (131) du moteur thermique (2) au moyen de la source d'énergie additionnelle (3), la commande (203) des moyens de fourniture en carburant (111, 122, 125), de manière que du carburant soit autorisé à passer en au moins un des cylindres (102), de manière à permettre à du carburant de passer au dispositif de traitement des gaz d'échappement (13, 131, 132, 133), et la commande des moyens de commande d'écoulement d'air (101, 105, 107, 110), de manière à commander la combustion dans le dispositif de traitement des gaz d'échappement (13, 131, 132, 133).

13. Procédé selon la revendication 12, dans lequel la commande de la combustion dans le dispositif de traitement des gaz d'échappement (13, 131, 132, 133) comprend la commande d'un emplacement ou d'une région à température maximale dans le dispositif de traitement des gaz d'échappement (13, 131, 132, 133).

14. Système de propulsion pour véhicule hybride (1), comprenant un moteur à combustion interne (2) et une source d'énergie additionnelle (3), le moteur à combustion interne (2) comprenant un vilebrequin (131) et au moins un cylindre (102), le système de propulsion de véhicule hybride comprenant en outre des moyens de stockage de carburant (11), des moyens de fourniture en carburant (111, 122, 125, 133), un dispositif de traitement des gaz d'échappement (13, 131, 132, 133) étant installé en aval du cylindre (102), et une unité de commande (109), le système étant adapté pour, dans un mode à moteur thermique à l'arrêt, effectuer le pompage d'air (203) vers le dispositif de traitement des gaz d'échappement (13, 131, 132, 133), et en ce que l'unité de commande (109) étant adaptée pour effectuer la commande (203), dans le mode à moteur thermique à l'arrêt et tandis que de l'air est pompé (203) vers le dispositif de traitement des gaz d'échappement (13, 131, 132, 133), des moyens de fourniture en carburant (111, 122, 125, 133), de manière que du carburant soit autorisé à passer au dispositif de traitement des gaz d'échappement (13, 131, 132, 133), **caractérisé en ce qu'**il est en outre adapté pour simultanément effectuer la commande des moyens de commande d'écoulement d'air (101, 105, 107, 110, 132), de manière à commander la combustion dans le dispositif de traitement des gaz d'échappement (13, 131, 132, 133).

15. Système de propulsion pour véhicule hybride (1) selon la revendication 14, **caractérisé en ce que** les moyens de fourniture en carburant (111, 122, 125) sont prévus pour le moteur thermique (2), **en ce que** le système est adapté pour, dans le mode à moteur thermique à l'arrêt, effectuer le pompage d'air (203) vers le dispositif de traitement des gaz d'échappement (13, 131, 132, 133), par rotation du vilebrequin (131) du moteur thermique (2) au moyen de la source d'énergie additionnelle (3), et **en ce que** l'unité de commande (109) est adaptée pour, dans le mode à moteur thermique à l'arrêt et tandis que le système de propulsion de véhicule hybride pompe de l'air (203) vers le dispositif de traitement des gaz d'échappement (13, 131, 132, 133), par rotation du vilebrequin (131) du moteur thermique (2) au moyen de la source d'énergie additionnelle (3), commander (203) les moyens de fourniture en carburant (111, 122, 125, 133), de manière que du carburant soit autorisé à passer dans au moins l'un des cylindres (102) de manière que du carburant soit autorisé à passer au dispositif de traitement des gaz d'échappement (13, 131, 132, 133), et pour simultanément effectuer la commande des moyens de commande d'écoulement d'air (101, 105, 107, 110, 132), de manière à commander la combustion dans le dispositif de traitement des gaz d'échappement (13, 131, 132, 133).

16. Système selon la revendication 15, dans lequel l'unité de commande (109) est adaptée pour commander la combustion dans le dispositif de traitement des gaz d'échappement (13, 131, 132, 133), par commande d'un emplacement ou d'une région à température maximale dans le dispositif de traitement des gaz d'échappement (13, 131, 132, 133).

17. Véhicule hybride, comprenant un système de propulsion selon l'une quelconque des revendications 14 à 16.
